(19) Europäisches Patentamt

European Patent Office

Office européen des brevets

(11) **EP 3 401 853 A1**

(12) # EUROPEAN PATENT APPLICATION
published in accordance with Art. 153(4) EPC

(43) Date of publication:
**14.11.2018 Bulletin 2018/46**

(21) Application number: **16883458.8**

(22) Date of filing: **29.12.2016**

(51) Int Cl.:
**G06Q 10/04** (2012.01)     **G06K 9/62** (2006.01)

(86) International application number:
**PCT/CN2016/112853**

(87) International publication number:
**WO 2017/118333 (13.07.2017 Gazette 2017/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **08.01.2016 CN 201610014971**

(71) Applicant: **Alibaba Group Holding Limited
Grand Cayman (KY)**

(72) Inventors:
• **XUE, Shaofei
  Hangzhou
  Zhejiang 311121 (CN)**
• **ZHANG, Jiaxing
  Hangzhou
  Zhejiang 311121 (CN)**
• **CUI, Hengbin
  Hangzhou
  Zhejiang 311121 (CN)**

(74) Representative: **Finnegan Europe LLP
1 London Bridge
London SE1 9BG (GB)**

(54) **METHOD AND DEVICE FOR PREDICTING USER PROBLEM BASED ON DATA DRIVE**

(57) The present invention discloses a method and a data driven apparatus for predicting a user question. The method includes: collecting user behavior data and pre-processing the user behavior data when a question raised by a user is received; intercepting candidate behavior data that is contributive to the question raised by the user from the pre-processed user behavior data; and screening the candidate behavior data by means of a set target behavior data set, screening out candidate behavior data that is contained in the target behavior data set from the candidate behavior data, inputting the screened candidate behavior data into a trained classifier model, and predicting a category to which the question raised by the user belongs. The apparatus of the present invention includes a pre-processing module, an interception module and a prediction module. The method and the apparatus of the present invention can enhance the prediction effect significantly.

```
                                                          ┌── S1
┌─────────────────────────────────────────────────────────┐
│ Collect user behavior data and pre-process the user      │
│ behavior data when a question raised by a user is        │
│ received                                                 │
└─────────────────────────────────────────────────────────┘
                            │
                            ▼                             ┌── S2
┌─────────────────────────────────────────────────────────┐
│ Intercept candidate behavior data that is contributive   │
│ to the question raised by the user from the              │
│ pre-processed user behavior data                        │
└─────────────────────────────────────────────────────────┘
                            │
                            ▼                             ┌── S3
┌─────────────────────────────────────────────────────────┐
│ Screen the candidate behavior data by means of a set     │
│ target behavior data set, screen out candidate           │
│ behavior data that is contained in the target behavior   │
│ data set from the candidate behavior data, input         │
│ the screened candidate behavior data into a trained      │
│ classifier model, and predict a category to which        │
│ the question raised by the user belongs                  │
└─────────────────────────────────────────────────────────┘
```

**FIG. 2**

EP 3 401 853 A1

## Description

The present application claims priority to Chinese Patent Application No. 201610014971.0, filed on January 8, 2016 and entitled "METHOD AND APPARATUS FOR PREDICTING USER QUESTION BASED ON DATA DRIVE", the entire contents of which are incorporated herein by reference.

## Technical Field

The present invention relates to the field of data processing technologies, and in particular, to a data driven method and apparatus for predicting a user question.

## Background Art

Users often encounter problems that they cannot handle when using products or services, and then they will ask customer service staff for help. Usually, the customer service staff needs to have multiple rounds of conversations with a user to determine the problem encountered by the user, which requires a large amount of human cost. If a problem that a user may encounter can be predicted in advance, a relevant answer can be intelligently pushed or the customer service staff can be helped to locate the user's problem more effectively.

Predicting in advance possible problems that users may encounter is a typical multi-classification problem, which is usually composed of feature selection and modeling. In an existing method, when a feature selection end extracts features, it is common to set some rules by human, and these rules are empirically considered to be associated with a question that a user may ask, for example, whether the user has subscribed to a certain service, whether the user has had a record of consumption in the past few days, or the like. By matching these rules, features that describe the state of the user prior to asking the question can be obtained. Then the features are modeled by using a logistic regression technology to obtain a classifier and predict new features by using the classifier.

In the prior art, the human sets some rules that are empirically considered to be associated with a question that a user may encounter, and by matching these rules, features that describe the state of the user prior to asking the question are obtained. This leads to two problems: 1. It is not data-driven, but needs strong human intervention, and requires an intervener to fully understand and be familiar with a corresponding product or service. A lot of inconvenience will be introduced during frequent changes in the product or expansion of the service coverage, and scalability is not strong. 2. It fails to take into account a relationship between the user's behavior within a short time period before asking the customer service staff for help and the user question, and the user generally may have a series of behaviors within a short time period (for example, within 2 hours) before asking the customer service staff for help; these behaviors include, but are not limited to, clicking a mobile phone or a tablet PC client, browsing a PC webpage and other operations performed by the user, including the user's behavior trajectory information prior to asking the question; in theory, these behavior trajectories are strongly associated with the user's subsequent seeking recourse.

## Summary of the Invention

An objective of the present invention is to provide a method and a data driven apparatus for predicting a user question, for predicting a question that a user may encounter as accurately as possible before the user describes the question in the event that some user information and operations are known, which can avoid the influence of human intervention in the prior art and improve the accuracy of classification prediction.

To achieve the foregoing objective, the technical solution of the present invention is as follows:
A data driven method for predicting a user question includes:

collecting user behavior data and pre-processing the user behavior data when a question raised by a user is received;
intercepting candidate behavior data that is contributive to the question raised by the user from the pre-processed user behavior data; and

screening the candidate behavior data by means of a set target behavior data set, screening out candidate behavior data that is contained in the target behavior data set from the candidate behavior data, inputting the screened candidate behavior data into a trained classifier model, and predicting a category to which the question raised by the user belongs.

Further, a training process of the trained classifier model includes the following steps:

collecting the question fed back by the user and behavior data corresponding thereto, and pre-processing the collected user behavior data;

intercepting behavior data that is contributive to the question fed back by the user from the pre-processed user behavior data as candidate behavior data;

scoring, by using a data driven method according to questions fed back by all users and candidate behavior data corresponding thereto, the candidate behavior data corresponding to the question fed back by each user, screening out target behavior data in line with a set condition, and joining target behavior data corresponding to the questions fed back by all users to constitute a screened target behavior data set; and

obtaining a classifier model by training according to the question fed back by each user and the target behavior data set.

Further, the pre-processing includes:
removing interference behavior data whose frequency is lower than a set frequency threshold.
The pre-processing further includes:
digitally identifying the user behavior data. Digitally identifying the behavior data helps perform processing with the digital identifiers directly in the subsequent step, so that it is unnecessary to perform processing according to specific data of behavior data, for example, a URL, an API name or other long string data, and the processing is simpler.
Further, in the present invention, the candidate behavior data that is contributive to the question raised by the user is intercepted from the pre-processed user behavior data by using a method of windowing truncation, the windowing truncation including:
intercepting user behavior data in a recent period of time prior to the occurrence of the question.
Further, after the step of joining target behavior data corresponding to the questions fed back by all users to constitute a screened target behavior data set, the method further includes:
digitally identifying the target behavior data in the target behavior data set again.
Further, before the step of obtaining a classifier model by training, the method further includes a step of:
performing vectorization processing on the target behavior data in the target behavior data set.
Further, before the step of inputting the screened candidate behavior data into a trained classifier model, the method further includes:
performing vectorization processing on the candidate behavior data. The user behavior data after vectorization can be used to directly train a classifier model and perform actual prediction, and the calculation is easier.
The present invention further proposes a data driven apparatus for predicting a user question, including:

a pre-processing module configured to collect user behavior data and pre-process the user behavior data when a question raised by a user is received;
an interception module configured to intercept candidate behavior data that is contributive to the question raised by the user from the pre-processed user behavior data; and
a prediction module configured to screen the candidate behavior data by means of a set target behavior data set, screen out candidate behavior data that is contained in the target behavior data set from the candidate behavior data, input the screened candidate behavior data into a trained classifier model, and predict a category to which the question raised by the user belongs.

Further, the apparatus further includes a model training module configured to train a classifier model, and when training the classifier model, the model training module performs the following operations:

collecting the question fed back by the user and behavior data corresponding thereto, and pre-processing the collected user behavior data;
intercepting behavior data that is contributive to the question fed back by the user from the pre-processed user behavior data as candidate behavior data;
scoring, by using a data driven method according to questions fed back by all users and candidate behavior data corresponding thereto, the candidate behavior data corresponding to the question fed back by each user, screening out target behavior data in line with a set condition, and joining target behavior data corresponding to the questions fed back by all users to constitute a screened target behavior data set; and
obtaining a classifier model by training according to the question fed back by each user and the target behavior data set.

In the present invention, when pre-processing the collected user behavior data, the pre-processing module performs the following step:
removing interference behavior data whose frequency is lower than a set frequency threshold.
The pre-processing module is further configured to digitally identify the user behavior data.
Further, the interception module adopts a method of windowing truncation when intercepting candidate behavior data that is contributive to the question raised by the user from the pre-processed user behavior data, the windowing truncation including:

intercepting user behavior data in a recent period of time prior to the occurrence of the question.

Further, after joining target behavior data corresponding to the questions fed back by all users to constitute a screened target behavior data set, the model training module is further configured to digitally identify the target behavior data in the target behavior data set again.

Further, before obtaining a classifier model by training, the model training module is further configured to perform vectorization processing on the target behavior data in the target behavior data set.

Further, before inputting the screened candidate behavior data into a trained classifier model, the prediction module is further configured to perform vectorization processing on the candidate behavior data.

The method and the data driven apparatus for predicting a user question proposed in the present invention utilize users' behavior trajectory information within a short time period to perform classification prediction of user questions to improve the accuracy of classification, which significantly improves the effect of model prediction not including the information.

## Brief Description of the Drawings

FIG. 1 is a flowchart of training of a classifier model according to the present invention;
FIG. 2 is a flowchart of a data driven method for predicting a user question according to the present invention; and
FIG. 3 is a schematic structural diagram of a data driven apparatus for predicting a user question according to the present invention.

## Detailed Description

The technical solutions of the present invention are described in further detail below with reference to the accompanying drawings and embodiments. The following embodiments do not limit the present invention.

The general idea of the present invention is to train a classifier model by using training data, and analyze user behavior data according to the trained classifier model to predict a question that a user may encounter.

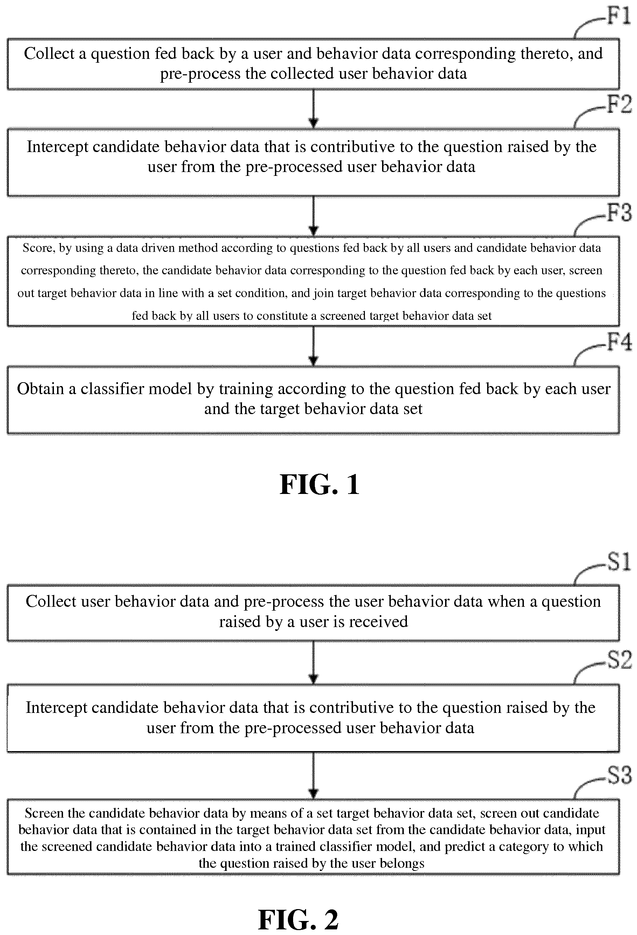

As shown in FIG. 1, a process of training a classifier model by using training data in this embodiment is as follows:
F1. A question fed back by a user and behavior data corresponding thereto are collected, and the collected user behavior data is pre-processed. The pre-processing includes removing interference behavior data and digitally identifying the behavior data.

For a question fed back by any user, the user's behavior data is collected to obtain a large amount of behavior data. The behavior data is some user operations, including clicking a mobile phone or a tablet PC client, browsing a PC webpage and other operations performed by the user. The operations are represented by URLs or API names, which are preceded by a unix timestamp. For example, behaviors of a user X in the past period of time can be represented as:

1438661879: alipay.mappprod.shop.queryPage
1438661885: alipay.client.mobileapp.checkResult
1438661889: alipay.commerce.category.queryByCategoryId
1438661899: alipay.siteprobe.sync.queryWifis
1438661909: alipay.charity.mobile.donate.deduct.unsign
1438661999:https://couriercore.alipay.com/errorRepeatSubmit.htm
1438662999:https://cshall.alipay.com/lab/question.htm

To be more accurate and to facilitate subsequent processing, the pre-processing in this embodiment includes removing interference behavior data and digitally identifying the behavior data.

The interference behavior data removed refers to behavior data with an extremely low frequency of occurrence, for example, lower than a set frequency threshold. The behavior data with the extremely low frequency of occurrence results in a low possibility that the user feeds back a question, and thus is not taken into account in this embodiment, so that the interference brought about by the behavior data with the extremely low frequency of occurrence can be eliminated.

The digitally identifying the behavior data is to facilitate performing processing directly with the digital identifiers in the subsequent step, so that it is unnecessary to perform processing according to specific data of the behavior data, for example, a URL, an API name or other long string data, and the processing is simpler.

The digitally identifying the behavior data can be digitally identifying URLs or APIs of the behavior data according to a mapping table prepared in advance; or counting frequencies of occurrence of the behavior data to sort and number the behavior data according to the quantities of the frequencies, and using the numbers as digital identifiers of the behavior data; or obtaining digital identifiers corresponding to the behavior data by HASH calculation according to specific content of the behavior data. The behavior data after digital identification becomes:

```
1438661879: 2
1438661885: 65
1438661889: 11
1438661899:6
1438661909: 18
1438661999: 108
1438662999:111
```

Screening and processing are performed directly with the digital identifiers in the subsequent step.

F2. Candidate behavior data that is contributive to the question raised by the user is intercepted from the pre-processed user behavior data.

For a large amount of user behavior data, the user's behavior data in a recent period of time prior to the occurrence of the question often really affects the question fed back by the user. That is, the behavior data that is contributive to the question fed back by the user is the user's behavior data in a recent period of time, and the influence of historical behavior data can be ignored. Therefore, in this embodiment, it is necessary to intercept user behavior data and select the user's behavior data in a recent period of time as candidate behavior data.

Specifically, the user behavior data is intercepted by windowing, and a fixed window length or a variable window length can be selected. The fixed window length is, for example, 30-120 pieces of behavior data, that is, 30-120 pieces of behavior data ahead of the current behavior data are selected. The variable window length is selecting behavior data in certain duration ahead of the current behavior data, for example, behavior data within 0.5 hours to 2 hours ahead of the current time.

For example, for the above behavior data, windowing truncation backtracks from the last behavior data, that is, 1438662999:111. The length is a fixed window length (30-120 pieces of data) or a variable window length (0.5 hours to 2 hours, which is determined by a unix timestamp). Assume that the data after windowing truncation becomes:

```
1438661885: 65
1438661889: 11
1438661899:6
1438661909: 18
1438661999: 108
1438662999:111
```

Therefore, candidate behavior data that is contributive to the question fed back by the user is obtained, and behavior data corresponding to a question fed back by each user is traversed to obtain candidate behavior data corresponding to the question fed back by each user.

F3. According to questions fed back by all users and candidate behavior data corresponding thereto, the candidate behavior data corresponding to the question fed back by each user is scored by using a data driven method, target behavior data in line with a set condition is screened out, and target behavior data corresponding to the questions fed back by all users is joined to constitute a screened target behavior data set.

In this embodiment, the questions fed back by all the users are used as a file set, and the question fed back by each user is used as a file. In this embodiment, the data driven method is a Term Frequency-Inverse Document Frequency (TF-IDF) method. The TF-IDF method is a common statistical method with weighted technique for information retrieval and data mining to assess the importance of a word for one of the files in a file set or a corpus. The importance of a word increases proportionally with the number of times it appears in the file, but at the same time it decreases inversely proportionally with the frequency that it appears in the corpus. For this embodiment, the word is equivalent to the candidate behavior data, the questions fed back by all the users are used as a file set, the question fed back by each user is used as a file, and the candidate behavior data corresponding to the question fed back by each user is scored by TF-IDF.

The main idea of TF-IDF is as follows: if a word or phrase appears in an article at a high frequency TF but rarely appears in other articles, it can be considered that the word or phrase has a good category distinguishingability, and is suitable for classification. TFIDF is actually TFXIDF, TF (Term Frequency) and IDF (Inverse Document Frequency). TF indicates the frequency that an entry appears in a document d. The main idea of IDF is as follows: if there are fewer documents containing an entry t, that is, the smaller n is, the larger IDF is, indicating that the entry t has a good category distinguishingability. If the number of documents containing an entry t in a category C is m and the total number of documents containing t in other categories is k, it is apparent that the number of all the documents containing t is n=m+k. When m is great, n is also great, the value of IDF obtained according to an IDF formula will be small, indicating that the entry t has a poor category distinguishingability.

A detailed algorithm is as follows:
In the first step, a TF is calculated:

$$\text{Term Frequency (TF)} = \frac{\text{the number of times a term appears in an article}}{\text{the total number of terms in the article}}$$

In the second step, an IDF is calculated:

$$\text{Inverse Document Frequency (IDF)}$$

$$= \log \frac{\text{the total number of documents in a corpus}}{\text{the number of documents containing the term} + 1}$$

In the third step, TF-IDF is calculated:

$$\text{TF-IDF} = \text{TF} \times \text{IDF}$$

The user behavior data can be seen as words to a degree, and the importance of a word for a file in a file set or a corpus is applied to screening behavior data by using the TF-IDF technique as reference. Behavior data suitable for classification is screened out, and the behavior data screened out is referred to as target behavior data.

In this embodiment, for the question fed back by each user, first N (50-200) pieces of behavior data with the highest scores or behavior data higher than a threshold can be used as target behavior data. The target behavior data corresponding to the questions fed back by all the users is joined to constitute a screened target behavior data set. The amount of behavior data included in the set is much less than the amount of behavior data in all training data.

For example, behavior data corresponding to a question A is (represented with digital identifiers):

6 18 1 9 77 98 69 ......................
....................................88 189 87

All the digital identifiers are scored by TF-IDF, and top N (e.g., 50) digital identifiers which are the most important for the question A are taken from high to low, so that behavior data which is the most important for the question A can be obtained:
A: 11 18........108.......

Sets of digital identifiers corresponding to all the questions are joined to constitute a target behavior data set. Thus, when the questions fed back by the users are recognized as known questions, the target behavior data set contains target behavior data of all the known questions.

Further, the target behavior data in the target behavior data set are digitally identified again, so that the set is simpler to facilitate subsequent processing.

F4. A classifier model is obtained by training according to the question fed back by each user and the target behavior data set.

A classifier model is obtained by training by using known questions and target behavior data corresponding thereto. With the classifier model, when a user feeds back a question, which known question the question may be can be predicted by analyzing the user's behavior data, so that it is convenient for the customer service to answer the user's question and provide a solution.

The classifier model includes, but is not limited to, a logistic regression model, a deep neural network model, a support vector machine model, a recursive neural network model, and so on. As there are lots of methods for obtaining a model by training according to training data in the prior art, they are not described in detail here.

As shown in FIG. 2, this embodiment provides a data driven method for predicting a user question, including:

Step S1. User behavior data is collected and pre-processed when a question raised by a user is received.
Step S2. Candidate behavior data that is contributive to the question raised by the user is intercepted from the pre-processed user behavior data.

After receiving the question raised by the user, the customer service can capture user behavior data and pre-process the user behavior data. A specific pre-processing method and how to carry out windowing truncation have been described above during training of the classifier model, which are no longer described in detail here.

Step S3. The candidate behavior data is screened by means of a set target behavior data set, candidate behavior data that is contained in the target behavior data set is screened out from the candidate behavior data, the screened candidate behavior data is input into a trained classifier model, and a category to which the question raised by the user belongs is predicted.

For example, after being screened by means of a target behavior data set, behavior data of a user X becomes:

1438661889: 11
1438661909: 18
1438661999: 108

Assume that the target behavior data set does not include 1438661885: 65, 1438661899:6 and 1438662999:111, the three pieces of data will be removed since they are not included in the target behavior data set.

As the target behavior data set has been obtained by screening and the classifier model has been obtained by training, when there is a user submitting a question to the customer service, the customer service can submit the user's candidate behavior data to a trained classifier model. The classifier model calculates the category of the question raised by the user, outputs probabilities corresponding to different questions, and selects the problem with the highest probability as the category to which the question raised by the user belongs.

Further, to facilitate training the classifier model and subsequent prediction, the data driven method for predicting a user question in this embodiment further performs vectorization processing on the target behavior data in the target behavior data set, and performs vectorization processing on the candidate behavior data, respectively. Perform vectorization processing

The vectorization processing is divided into binarization and quantization. The binarization indicates that 1 is set at a corresponding vector position if a behavior occurs, and 0 is set if no behavior occurs. The quantization indicates the number of times the behavior occurs at the corresponding vector position. The user behavior data after vectorization can be used to directly train the classifier model and used for actual prediction, and can also be combined with original features to train the classifier model and be used for actual prediction.

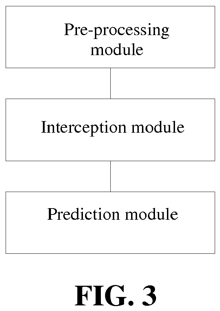

As shown in FIG. 3, corresponding to the foregoing method, the present invention further proposes a data driven apparatus for predicting a user question, the apparatus including:

a pre-processing module configured to collect user behavior data and pre-process the user behavior data when a question raised by a user is received;
an interception module configured to intercept candidate behavior data that is contributive to the question raised by the user from the pre-processed user behavior data; and
a prediction module configured to screen the candidate behavior data by means of a set target behavior data set, screen out candidate behavior data that is contained in the target behavior data set from the candidate behavior data, input the screened candidate behavior data into a trained classifier model, and predict a category to which the question raised by the user belongs.

In this embodiment, the apparatus for predicting a user question further includes a model training module configured to train a classifier model, and when training the classifier model, the model training module performs the following operations:

collecting the question fed back by the user and behavior data corresponding thereto, and pre-processing the collected user behavior data;
intercepting behavior data that is contributive to the question fed back by the user from the pre-processed user behavior data as candidate behavior data;
scoring, by using a data driven method according to questions fed back by all users and candidate behavior data corresponding thereto, the candidate behavior data corresponding to the question fed back by each user, screening out target behavior data in line with a set condition, and joining target behavior data corresponding to the questions fed back by all users to constitute a screened target behavior data set; and
obtaining a classifier model by training according to the question fed back by each user and the target behavior data set.

In this embodiment, when pre-processing the collected user behavior data, the pre-processing module performs the following step:

removing interference behavior data whose frequency is lower than a set frequency threshold.

Further, the pre-processing module is further configured to digitally identify the user behavior data.

In this embodiment, the interception module adopts a method of windowing truncation when intercepting candidate behavior data that is contributive to the question raised by the user from the pre-processed user behavior data, the windowing truncation including:

intercepting user behavior data in a recent period of time prior to the occurrence of the question.

Corresponding to the foregoing method, in this embodiment, after joining target behavior data corresponding to the questions fed back by all users to constitute a screened target behavior data set, the model training module is further configured to digitally identify the target behavior data in the target behavior data set again.

In this embodiment, before obtaining a classifier model by training, the model training module is further configured to perform vectorization processing on the target behavior data in the target behavior data set.

Corresponding to the foregoing method, in this embodiment, before inputting the screened candidate behavior data into a trained classifier model, the prediction module is further configured to perform vectorization processing on the candidate behavior data.

The above embodiments are only used to describe the technical solution of the present invention instead of limiting the technical solution. Those skilled in the art can make various corresponding changes and transformations without departing from the spirit and the essence of the present invention. However, these corresponding changes and transformations should all belong to the protection scope of the appended claims of the present invention.

**Claims**

1. A data driven method for predicting a user question, comprising:

   collecting user behavior data and pre-processing the user behavior data when a question raised by a user is received;
   intercepting candidate behavior data that is contributive to the question raised by the user from the pre-processed user behavior data; and
   screening the candidate behavior data by means of a set target behavior data set, screening out candidate behavior data that is contained in the target behavior data set from the candidate behavior data, inputting the screened candidate behavior data into a trained classifier model, and predicting a category to which the question raised by the user belongs.

2. The data driven method for predicting a user question according to claim 1, wherein a training process of the trained classifier model comprises the following steps:

   collecting the question fed back by the user and behavior data corresponding thereto, and pre-processing the collected user behavior data;
   intercepting behavior data that is contributive to the question fed back by the user from the pre-processed user behavior data as candidate behavior data;
   scoring, by using a data driven method according to questions fed back by all users and candidate behavior data corresponding thereto, the candidate behavior data corresponding to the question fed back by each user, screening out target behavior data in line with a set condition, and joining target behavior data corresponding to the questions fed back by all users to constitute a screened target behavior data set; and
   obtaining a classifier model by training according to the question fed back by each user and the target behavior data set.

3. The data driven method for predicting a user question according to claim 1 or 2, wherein the pre-processing comprises:
   removing interference behavior data whose frequency is lower than a set frequency threshold.

4. The data driven method for predicting a user question according to claim 3, wherein the pre-processing further comprises:
   digitally identifying the user behavior data.

**5.** The data driven method for predicting a user question according to claim 1 or 2, wherein the candidate behavior data that is contributive to the question raised by the user is intercepted from the pre-processed user behavior data by using a method of windowing truncation, the windowing truncation comprising:
intercepting user behavior data in a recent period of time prior to the occurrence of the question.

**6.** The data driven method for predicting a user question according to claim 4, wherein after the step of joining target behavior data corresponding to the questions fed back by all users to constitute a screened target behavior data set, the method further comprises:
digitally identifying the target behavior data in the target behavior data set again.

**7.** The data driven method for predicting a user question according to claim 2, wherein before the step of obtaining a classifier model by training, the method further comprises a step of:
performing vectorization processing on the target behavior data in the target behavior data set.

**8.** The data driven method for predicting a user question according to claim 7, wherein before the step of inputting the screened candidate behavior data into a trained classifier model, the method further comprises:
performing vectorization processing on the candidate behavior data.

**9.** A data driven apparatus for predicting a user question, comprising:

a pre-processing module configured to collect user behavior data and pre-process the user behavior data when a question raised by a user is received;
an interception module configured to intercept candidate behavior data that is contributive to the question raised by the user from the pre-processed user behavior data; and
a prediction module configured to screen the candidate behavior data by means of a set target behavior data set, screen out candidate behavior data that is contained in the target behavior data set from the candidate behavior data, input the screened candidate behavior data into a trained classifier model, and predict a category to which the question raised by the user belongs.

**10.** The data driven apparatus for predicting a user question according to claim 9, wherein the apparatus further comprises a model training module configured to train a classifier model, and when training the classifier model, the model training module performs the following operations:

collecting the question fed back by the user and behavior data corresponding thereto, and pre-processing the collected user behavior data;
intercepting behavior data that is contributive to the question fed back by the user from the pre-processed user behavior data as candidate behavior data;
scoring, by using a data driven method according to questions fed back by all users and candidate behavior data corresponding thereto, the candidate behavior data corresponding to the question fed back by each user, screening out target behavior data in line with a set condition, and joining target behavior data corresponding to the questions fed back by all users to constitute a screened target behavior data set; and
obtaining a classifier model by training according to the question fed back by each user and the target behavior data set.

**11.** The data driven apparatus for predicting a user question according to claim 9 or 10, wherein when pre-processing the collected user behavior data, the pre-processing module performs the following step:
removing interference behavior data whose frequency is lower than a set frequency threshold.

**12.** The data driven apparatus for predicting a user question according to claim 11, wherein the pre-processing module is further configured to digitally identify the user behavior data.

**13.** The data driven apparatus for predicting a user question according to claim 9 or 10, wherein the interception module adopts a method of windowing truncation when intercepting candidate behavior data that is contributive to the question raised by the user from the pre-processed user behavior data, the windowing truncation comprising:
intercepting user behavior data in a recent period of time prior to the occurrence of the question.

**14.** The data driven apparatus for predicting a user question according to claim 12, wherein after joining target behavior data corresponding to the questions fed back by all users to constitute a screened target behavior data set, the model training module is further configured to digitally identify the target behavior data in the target behavior data set again.

15. The data driven apparatus for predicting a user question according to claim 10, wherein before obtaining a classifier model by training, the model training module is further configured to perform vectorization processing on the target behavior data in the target behavior data set.

16. The data driven apparatus for predicting a user question according to claim 15, wherein before inputting the screened candidate behavior data into a trained classifier model, the prediction module is further configured to perform vectorization processing on the candidate behavior data

F1

Collect a question fed back by a user and behavior data corresponding thereto, and pre-process the collected user behavior data

F2

Intercept candidate behavior data that is contributive to the question raised by the user from the pre-processed user behavior data

F3

Score, by using a data driven method according to questions fed back by all users and candidate behavior data corresponding thereto, the candidate behavior data corresponding to the question fed back by each user, screen out target behavior data in line with a set condition, and join target behavior data corresponding to the questions fed back by all users to constitute a screened target behavior data set

F4

Obtain a classifier model by training according to the question fed back by each user and the target behavior data set

## FIG. 1

S1

Collect user behavior data and pre-process the user behavior data when a question raised by a user is received

S2

Intercept candidate behavior data that is contributive to the question raised by the user from the pre-processed user behavior data

S3

Screen the candidate behavior data by means of a set target behavior data set, screen out candidate behavior data that is contained in the target behavior data set from the candidate behavior data, input the screened candidate behavior data into a trained classifier model, and predict a category to which the question raised by the user belongs

## FIG. 2

```
┌─────────────────────────┐
│      Pre-processing      │
│         module           │
└─────────────────────────┘
             │
┌─────────────────────────┐
│   Interception module    │
│                          │
└─────────────────────────┘
             │
┌─────────────────────────┐
│    Prediction module     │
│                          │
└─────────────────────────┘
```

## FIG. 3

## INTERNATIONAL SEARCH REPORT

| International application No. |
| --- |
| **PCT/CN2016/112853** |

**A.  CLASSIFICATION OF SUBJECT MATTER**

G06Q 10/04 (2012.01) i; G06K 9/62 (2006.01) i

According to International Patent Classification (IPC) or to both national classification and IPC

**B.  FIELDS SEARCHED**

Minimum documentation searched (classification system followed by classification symbols)

G06Q; G06K

Documentation searched other than minimum documentation to the extent that such documents are included in the fields searched

Electronic data base consulted during the international search (name of data base and, where practicable, search terms used)

CNPAT, WPI, EPODOC, CNKI, IEEE, GOOGLE: estimate, training, screening, category, question, quiz, intention, forecast, predict, action, behavior, history, filtrate, classify, type

**C.  DOCUMENTS CONSIDERED TO BE RELEVANT**

| Category* | Citation of document, with indication, where appropriate, of the relevant passages | Relevant to claim No. |
| --- | --- | --- |
| X | CN 104951433 A (BEIJING JINGDONG SHANGKE INFORMATION TECHNOLOGY CO., LTD. et al.), 30 September 2015 (30.09.2015), description, paragraphs [0029]-[0059], and figures 1 and 5 | 1-16 |
| A | CN 104572734 A (TENCENT TECHNOLOGY SHENZHEN CO., LTD.), 29 April 2015 (29.04.2015), the whole document | 1-16 |
| A | CN 104778176 A (ALIBABA GROUP HOLDING LIMITED), 15 July 2015 (15.07.2015), the whole document | 1-16 |
| A | CN 103390194 A (BEIJING SAMSUNG COMMUNICATION TECHNOLOGY RESEARCH INSTITUTE et al.), 13 November 2013 (13.11.2013), the whole document | 1-16 |
| A | US 2015106284 A1 (ASKEM TLV LTD.), 16 April 2015 (16.04.2015), the whole document | 1-16 |

☐ Further documents are listed in the continuation of Box C.          ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 08 February 2017 (08.02.2017) | **11 April 2017 (11.04.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHOU, Yanan** Telephone No.: (86-10) **62413669** |
| --- | --- |

Form PCT/ISA/210 (second sheet) (July 2009)

<div align="center">

## INTERNATIONAL SEARCH REPORT
### Information on patent family members

</div>

| International application No. |
| --- |
| **PCT/CN2016/112853** |

| Patent Documents referred in the Report | Publication Date | Patent Family | Publication Date |
| --- | --- | --- | --- |
| CN 104951433 A | 30 September 2015 | None | |
| CN 104572734 A | 29 April 2015 | US 2016239738 A1 | 18 August 2016 |
| | | WO 2015058558 A1 | 30 April 2015 |
| CN 104778176 A | 15 July 2015 | HK 1207710 A1 | 05 February 2016 |
| CN 103390194 A | 13 November 2013 | None | |
| US 2015106284 A1 | 16 April 2015 | None | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610014971